# EUROPÄISCHE PATENTSCHRIFT

(11) **EP 2 422 017 B1**
(45) Veröffentlichungstag und Bekanntmachung des Hinweises auf die Patenterteilung: **06.11.2013**
(21) Anmeldenummer: 10726876.5
(22) Anmeldetag: 21.04.2010
(51) Int. Cl.: E02D 27/42, F03D 11/00

(54) **VERFAHREN ZUR HERSTELLUNG ÜBERSCHWERER ROHRVERBINDUNGEN, BEVORZUGT FÜR OFFSHORE-WINDENERGIEANLAGEN**
METHOD FOR THE PRODUCTION OF EXTRA HEAVY PIPE JOINTS, PREFERABLY FOR OFF-SHORE WIND ENERGY PLANTS
PROCÉDÉ DE FABRICATION DE RACCORDS TUBULAIRES HYPERLOURDS DE PRÉFÉRENCE DESTINÉS À DES INSTALLATIONS ÉOLIENNES EN MER

(30) Priorität: 23.04.2009 DE 102009018343; 24.06.2009 DE 102009030172
(43) Veröffentlichungstag der Anmeldung: 29.02.2012
(73) Patentinhaber: WeserWind GmbH Offshore Construction Georgsmarienhütte, 27572 Bremerhaven (DE)
(72) Erfinder: SPRECKELMEYER, Rainer, 49082 Osnabrück (DE)
(74) Vertreter: Röther, Peter
(86) Internationale Anmeldenummer: PCT/DE2010/000448
(87) Internationale Veröffentlichungsnummer: WO 2010/121596

(56) Entgegenhaltungen:
- WO-A2-2009/087200
- DE-U1-202004 020 720
- GB-A- 2 182 375

## Beschreibung

Die Erfindung betrifft ein Verfahren zur einfachen, kostengünstigen Herstellung von Komponenten für überschwere Rohrfachwerk-, Rohr- und Konuskonstruktionen bei Offshore-Windenergieanlagen.

Die Trag- und Gründungsstrukturen von Offshore-Windenergieanlagen sind in aller Regel als geschweißte Stahlkonstruktionen oder als Betonkonstruktionen ausgeführt. Eine Gründungsstruktur aus Beton wird z.B. in GB2182375 beschrieben.

Eine schwimmende Mischkonstruktion, in der Fachwerkkomponenten aus Stahl mit Behälterteilen aus Beton kombiniert sind, beschreibt DE 102008003647. Geschweißte Stahlkonstruktionen sind typisch in Form eines Rohrfachwerkes oder einer Kastenstruktur ausgeführt. Eine Gründungsstruktur als Kastenkonstruktion, bestehend aus einem n-eckigen Stützgerüst, ist Gegenstand der Schrift DE202004020720U1.

Rohrfachwerke haben wegen ihrer stetig gekrümmten Oberfläche erhebliche Vorteile hinsichtlich Korrosionsschutz und Anströmwiderstand, was besonders bei Offshore- Anwendungen zum Tragen kommt. Problematisch ist die Gestaltung der Verbindung der Rohrfachwerkstäbe untereinander. Diese Verbindung wird fast ausschließlich durch Schweißen praktiziert.

Die Schrift EP2067914 beschreibt eine Rohrfachwerkkonstruktion in Form einer Gitterstruktur. Rohre vergleichsweise kleinen Durchmessers sind derart zu einem symmetrischen Fachwerk gefügt, dass sich die geometrische Vielfalt der Verbindungspunkte, der sogenannten Knoten, erheblich verringert.

Die Knoten sind vorgefertigt und werden auf der Baustelle vermittels einfacher Rundnähte mit den anschließenden Rohren verbunden. Man erreicht damit, dass im Bereich größter Belastung innerhalb des Knotens keine Schweißnaht verläuft. Man erreicht weiterhin, dass die Schweißnähte vermittels Orbitalschweißverfahren automatisiert oder zumindest mechanisiert hergestellt werden können. Die Knoten selbst sind keine Unikate, sondern Serienteile, besitzen Fügeflächen und vorbereitete Schweißbadsicherungen und können in ihrer geometrischen Form, ihrem Querschnitt und ihrer Wanddicke genau auf die herrschenden Kräfte abgestimmt werden.

Es ist naheliegend, solcherlei Knoten als Gusskonstruktion zu fertigen. Das wird in der Schrift DE2519769 vorgeschlagen. Fast beliebig viele Rohrachsen können sich in einem Punkt schneiden, ohne dass Interferenzen zwischen anschließenden Rohren auftreten.

Der Nachteil von gegossenen Knoten ist die geringe konstruktive Flexibilität. Eine wirtschaftliche Knotenherstellung ist wegen dem erforderlichen Gussmodell, der verlorenen Gussform, der vergleichsweise zeitaufwendigen Produktion nur bei serienähnlicher Fertigung möglich. Die Knoten können nicht vor Ort hergestellt und müssen von der Gießerei zur Baustelle transportiert werden, was deren maximale Abmessungen limitiert.

Eine weitere Möglichkeit der Knotenfertigung wird in GB2205915 beschrieben. Ein ebenes Blech wird in einer Matrize zunächst U-förmig umgeformt. Danach erhält es mit einem Dorn in einer weiteren Matrize eine Ausstülpung, die gelocht und beschnitten wird und den Stabanschluss bildet.

Eine ähnliche Lösung beschreibt auch EP0195063. In der Schrift wird darauf verwiesen, dass zwischen jedem Arbeitsschritt eine Wärmebehandlung notwendig ist. Es wird weiter vorgeschlagen, auch für einen Teil der Arbeitsschritte das Bauteil in gewärmten Zustand zu versetzen.

Vermittels dieser Art der Knotenherstellung gelingt ein stetiger, kerbarmer Übergang vom Knoten in den Stutzenanschluss. Entsprechend DE1072581 wird dieser Vorgang als Aushalsen bezeichnet.

Die Kraftlinien im Bauteil werden nicht unterbrochen, der Kraftfluss nicht gestört. Der Übergangsbereich kann kegelfömig gestaltet werden. Noch mehr als bei gegossenen Knoten sind konstruktive Restriktionen wirksam, da speziell geformte Werkzeuge und Maschinen zur Ausübung der Umformkräfte erforderlich sind. Für jeden Schnittwinkel und für jeden Anschlussdurchmesser werden andere Werkzeuge und Dorne benötigt.

Die Herstellung der Aushalsung ist eine stark handwerklich geprägte Tätigkeit, eine Mechanisierung oder Automatisierung scheint kaum möglich. Manuelle Anpassarbeiten hingegen sind immer erforderlich. Die Herstellung wird umso schwieriger, je größer der Rohrdurchmesser ist.

Rohrknoten können als reine Schweißverbindungen gestaltet werden. Ausgangspunkt sind zwei zylinderförmige Rohrsegmente mit in aller Regel unterschiedlichem Durchmesser, die ab einem bestimmten Durchmesser nicht mehr nahtlos gewalzt, sondern aus einem gerundeten Blech, dass mit einer Längsschweißnaht zu einem Zylinder, einem sogenannten Rohrschuss, geformt wird, hergestellt werden.

Das im Durchmesser kleinere, an der Verbindung beteiligte Rohr besitzt eine als Durchdringungs-, Verschneidungs- oder Sattelkontur bezeichnete Form an seinem Ende. Die Berechnung dieser Kontur, basierend auf räumlicher Trigonometrie, ist unter Nutzung von Computern vergleichsweise einfach und kann auch von jedem modernen CAD-System ausgeführt werden. Zur Herstellung der Kontur werden in aller Regel thermische Trennverfahren, wie Brenn- und Plasmaschneiden, genutzt. Noch weit verbreitet in der stahlverarbeitenden Industrie ist, den Brennschneid- oder Plasmabrenner manuell zu führen, indem- z.T. unter Zuhilfenahme einer Schablone- die Sattelkontur angerissen oder angekörnt wird und der Werker den Brenner manuell entlang dieser Bahn führt. Eine glatte Schnittflanke und eine definierte Fasenform kann auf diese Weise naturgemäß nicht hergestellt werden. Stand der Technik zur Herstellung der Sattelkontur ist die Nutzung einer Rohrbrennschneidmachine. Das Rohr wird in dieser Maschine von einer Dreheinheit programmgesteuert gedreht und im Zusammenwirken mit dem in der 12Uhr-Position befindlichen, entlang der Rohrachse programmgesteuert beweglichen Brenner entsteht die Sattelkontur. Leistungsfähige Rohrbrennschneidmaschinen, wie z.B. jene technische Lösung, die in EP180738 beschrieben ist, ermöglichen neben der Herstellung der Sattelkontur auch das Anfertigen einer sogenannten Schweißnahtvorbereitung. Diese dient dazu, eine v-förmige Fuge zwischen den beiden zu verbindenden Rohren zu schaffen, die bei der Montage mit Schweißgut gefüllt wird und die unlösbare Verbindung der zwei Rohre miteinander zu einem Rohrknoten bewirkt.

DD266144 beschreibt ein Verfahren, dass die Vorgehensweise bei der Herstellung eines Rohrkrümmers großer Nennweite umkehrt, derart, dass eine Abwicklung der Mantelfläche in eine Ebene stattfindet, die ebene Schnittform dann aus dem Blech ausgeschnitten und mit handwerklichen Mitteln diese Zuschnittform zu einem Rohrkrümmer geformt wird. Anpassarbeiten sind zwingend notwendig, da ein Rohrkrümmer aus geometrischer Sicht einen Torus und damit ein zweidimensional gekrümmtes Bauteil darstellt, das sich nur näherungsweise abwickeln lässt. Das Verfahren vernachlässigt Blechdicke und plastische Verformung beim Walzen.

Die zunehmende Größe der Windenergieanlagen erfordert Fundament- und Tragstrukturen mit extremen Abmessungen. Deren Einzelteile sind wegen ihrer Masse und wegen ihrer Abmessung für einen Straßentransport nicht geeignet. Die komplette Bearbeitung muss an einem Ort stattfinden, alle erforderlichen Maschinen und Anlagen müssen an diesem Ort verfügbar sein. Das ist besonders präkär hinsichtlich der Herstellung der Sattelkontur. Eine manuelle Herstellung ist wegen der Abmessungen der Bauteile und der bestehenden qualitativen Anforderungen ausgeschlossen. Eine Rohrbrennschneidmaschine hingegen muss für den notwendigen Rohrdurchmesser ausgelegt, damit sehr aufwendig ausgeführt sein und stellt einen erheblichen Kostenfaktor dar. Zum Zuschnitt kegelförmige Bauteile, z.B. der Schäfte von Offshore- und auch Onshore-Windtürmen, sind Rohrbrennschneidmaschinen nicht geeignet.

### Aufgabe der Erfindung

Aufgabe der Erfindung ist es, ein Verfahren für die Herstellung der Komponenten überschwerer Rohrkonstruktionen zu schaffen, dass die neuen und sehr strengen Anforderungen der Windenergiebranche hinsichtlich Passgenauigkeit, Schweißnahtqualität, Kerbwirkung an der Verbindungsstelle und Dauerhaftigkeit erfüllt. Es ist auch Aufgabe der Erfindung, die Wirtschaftlichkeit der Komponentenherstellung zu erhöhen, indem der Transport von Halbfabrikaten vereinfacht bzw. überhaupt erst ermöglicht wird, die Herstellung der Komponenten mit dem bei einem Stahlverarbeitungsbetrieb typischerweise vorhandenen Maschinenpark realisiert werden kann und der Einsatz einer Rohrbrennschneidmaschine obsolet wird.

### Erfindungsgemäße Lösung

Erfindungsgemäß wird die Aufgabe entsprechend den Merkmalen des Anspruchs 1 gelöst.

Zunächst wird ein dreidimensionales Computermodell des Bauteiles inklusive der aus schweißtechnischer Sicht optimalen Schweißnahtvorbereitung an der Verbindungsstelle zweier sich schneidender Bauteile geschaffen. Die Nahtvorbereitung muss so ausgeführt sein, dass der gesamte Bauteilquerschnitt mit einer Stumpfnaht mit dem Partnerelement verbunden wird. Eines der Partnerelemente erhält dazu eine als halbe V-Naht oder als K-Naht ausgeformte Nahtvorbereitung. Geometrische Bedingungen (Durchmesserverhältnisse, Schnittwinkel der Partnerelementachsen...) erfordern unter Umständen, dass die Nahtvorbereitung auch zur Innenseite eines Partnerelementes ausgeführt werden muss.

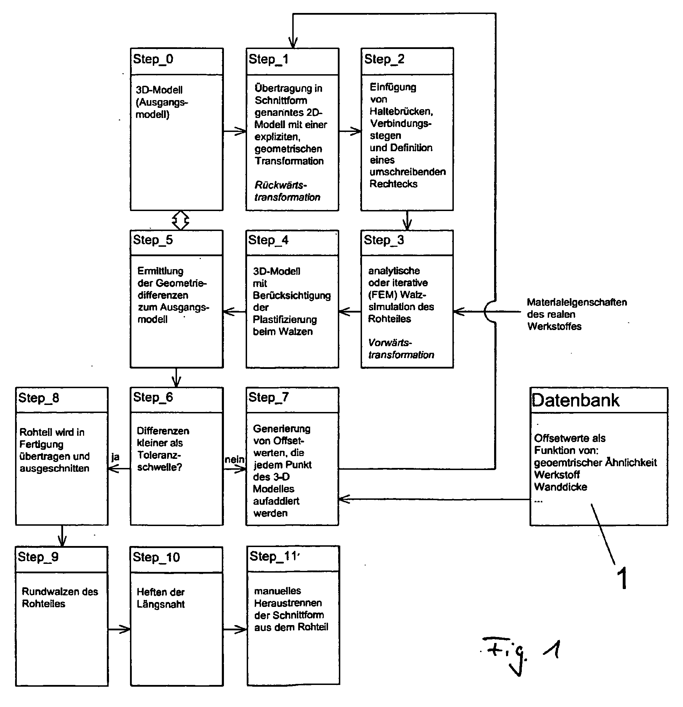

Das als 3D-Modell vorliegende Bauteil wird vermittels geometrischer und strukturmechanischer Berechnungen und unter Kenntnis des Walzprozessverlaufes in einem iterativen Prozess in ein ebenes, blechförmiges Bauteilmodell mit Schnittflanken variablen Fasenwinkels überführt. Dazu wird das 3D-Modell (Step_0) entsprechend Figur 1 zunächst mit einer explizften geometrischen Transformation in der Art einer Rückwärtstransformation in ein Schnittform genanntes 2D-Modell überführt (Step_1). Rückwärtstransformation meint, dass die Transformationsrichtung entgegen des Fertigungsablaufes erfolgt. Folgerichtig wird Vorwärtstransformation hier so verstanden, dass die Transformationsrichtung mit dem Fertigungsfluss identisch ist.

Die Schnittform ist ein ebenes Bauteil mit allerdings nicht senkrecht zur Bauteilebene verlaufenden Schnittflanken, die sich aus dem Fasenwinkelverlauf der Schnittkontur des 3D-Modelles aus Step_0 ergeben. Die Schnittform berücksichtigt jedoch zunächst nicht den Einfluss der Plastifizierung des Werkstoffes beim Walzen.

Um dieses Bauteilmodell herum wird ein umschreibendes Rechteck gefunden und das Bauteilmodell mit Haltebrücken und Verbindungsstegen mit diesem verankert wie gleichzeitig das in eventuell vorhandenen Ausschnitten und Löchern des 3D-Modelles befindliche Restmaterial in gleicher Weise mit der Schnittform verbunden wird (Step_2). Es entsteht ein Rohteil genanntes, rechteckiges Blechteil mit zumindest einer, in sich geschlossenen Schnittkontur, unterbrochen durch Haltestege und Verbindungsbrücken.

Auf Basis der Materialeigenschaften der am Bauteil zum Einsatz kommenden Stahlcharge, die bevorzugt durch einen Zugversuch gewonnen werden, und unter Nutzung mathematischer Methoden, z.B. der weit verbreiteten Methode der finiten Elemente (FEM), wird das Rohteil unter Berücksichtigung der Parameter der Walztechnologie, wie
Verwendung einer Drei- oder Vierwalzenbiegemaschine oder einer polygonalen Kantprozedur,
Walzendurchmesser bzw. Kantradius,
Anzahl der Walzschritte,
Walzenzustellung,
...
als Vorwärtstransformation (Step_3) zu einem dreidimensionalen Modell zurückgerechnet (Step_4) und werden die geometrischen Differenzen dieses Modelles zum 3D-Modell aus Step_0 ermittelt (Step_5). Ist die Geometriedifferenz zwischen dem Modell aus Step_0 und dem aus Step_4 kleiner als eine branchenübliche Geometrietoleranz, die erfahrungsgemäß zwischen 1...3mm liegen wird, kann der Iterationsprozess abgebrochen werden und kann das Rohteil aus Step_2 in ein Maschinenprogramm überführt und ausgeschnitten werden (Step_8). Danach wird das Rohteil zu seiner dreidimensionalen Form gewalzt, die üblicherweise ein Zylinder ist, jedoch auch ein Kegel sein kann (Step_9). Das Rohteil wird dann in seiner Längsrichtung geheftet (Step_10). Manuell wird in einem letzten Technologieschritt die Schnittform durch Auftrennung der Verbindungsstege und Haltebrücken separiert (Step_11), woran sich die übliche schweißtechnische Weiterverarbeitung anschließt.

Im entgegengesetzten Fall werden mit Methoden der numerischen Mathematik, z.B. der Regula Falsi, Offsetwerte gewonnen, die jedem Punkt der Schnittkontur der Schnittform aus Step_1 aufaddiert werden (Step_7). Der Iterationsprozess startet neu mit Step_2.

Beim derzeitigen Stand der Technik ist der Berechnungsgang in Step_3, die Vorwärtstransformation, extrem rechenintensiv, braucht weit über die übliche Leistungsfähigkeit eines Personalcomputers hinausreichende Rechenleistung und benötigt trotzdem Rechenzeiten in der Größenordnung von Stunden. Dies ist für eine praktische Anwendung sehr hinderlich.

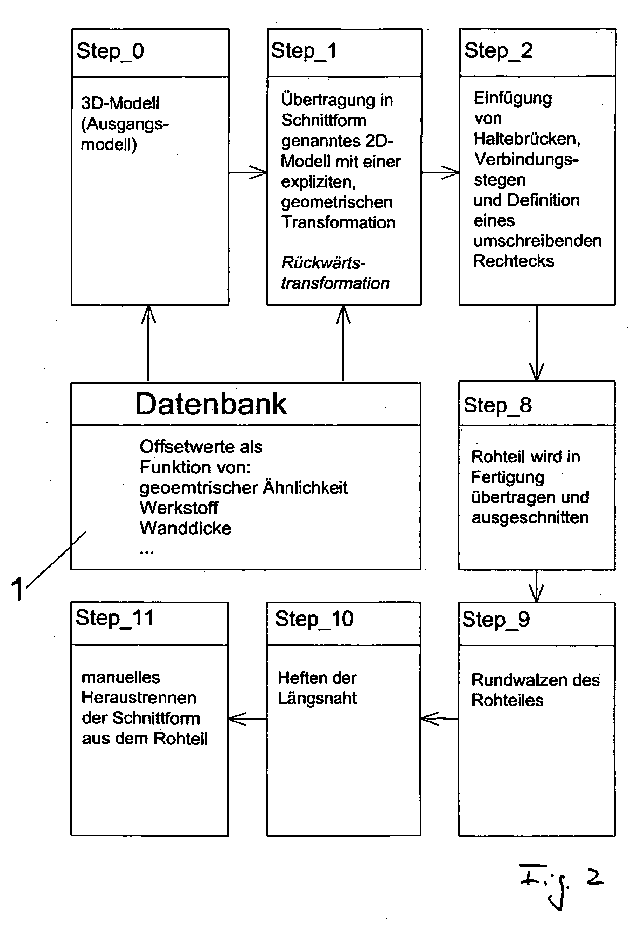

Deshalb wird weiterhin vorgeschlagen, eine Datenbank zu schaffen, die sowohl mit den Ergebnissen der eben beschriebenen mathematischer Berechnungen als auch mit Erfahrungswerten und Versuchsergebnissen aus der praktischen Anwendung des Walzens gefüllt ist und im Sinne einer Experten-Datenbank laufend mit neuen und verbessertem Datenmaterial aktualisiert und verbessert wird. Anhand von geometrischer Ähnlichkeit, Wanddicke, zweidimensionaler Ausdehnung und Biegeradius der Schnittform können aus der Datenbank Offsetwerte, die, zur Verfeinerung mit mathematischen Methoden in der Datenbank zwischeninterpoliert wurden, gewonnen werden, die der Schnittform in Step_1 aufaddiert werden und die in Figur 1 beschriebene Iteration (step_2 bis Step_7) durch Verringerung der Iterationsschritte abkürzen bzw. auch ganz überflüssig machen. Offline, also vor industrieller Nutzung des Verfahrens wird die Datenbank erstellt und online, bei der laufenden Nutzung in der industriellen Praxis, werden nur Offsetwerte aus dieser abgerufen und wahlweise auf das 3D-Modell selbst oder auf die aus dem 3D-Modell mit expliziter geometrischer Transformation errechnete Schnittform aufaddiert. Es ergibt sich ein vereinfachter, Zeit und Kosten sparender Berechnungsgang nach Figur 2.

### Übersicht über die verwendeten Bezugszeichen

- 1: - Datenbank
- 2: - Mastsegment
- 3: - Zarge
- 4: - Längsschweißnaht
- 5: - Zargenöffnung
- 6: - Dreidimensionale Schnittflanke
- 7: - Zylindrisch geformtes Blechsegment
- 8: - Zweidimensionales Blechsegment
- 9: - Transformierte Schnittflanke
- 10: - Verbindungsstege
- 11: - Abfallteil
- 12: - Hauptrohr
- 13:
- 14: - Stutzenrohr
- 15: - Person
- 16: - Schweißnahtvorbereitung
- 17: - Umkehrpunkt
- 18: - Plattenförmiges Teil
- 19: - Schnittflanke
- 20: - Rechteckiges Blechsegment
- 21: - Rohrachse
- 22: - Rundnaht

### Ausgestaltung der Erfindung anhand von Ausführungsbeispielen

Die weitere Ausgestaltung der Erfindung soll an nachfolgend aufgeführten Ausführungsbeispielen weiter erläutert werden.

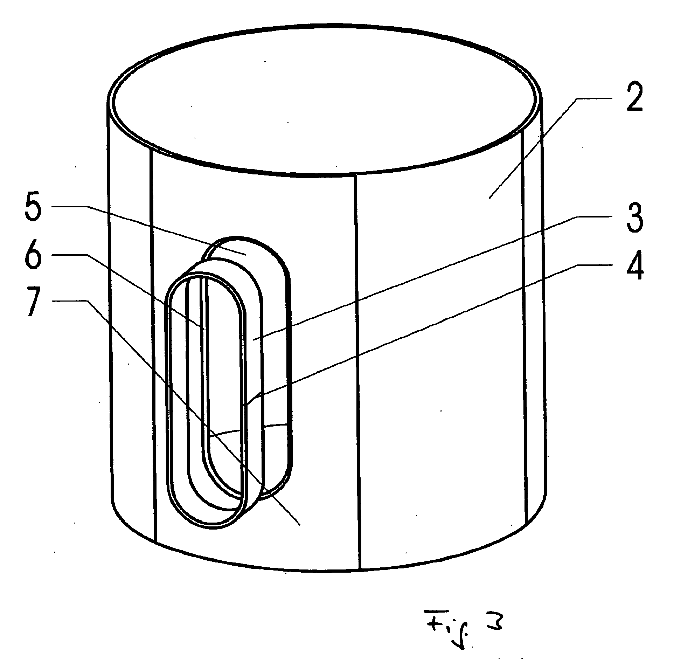

Ein erstes Ausführungsbeispiel entsprechend Figur 3 zeigt eine Durchdringung zwischen einem kegelförmigen Mastsegment 2 einer Windenergieanlage und einer vergleichsweise dickwandigen, ovalen Zarge 3. Die Zarge 3 umschließt eine Türöffnung und gleicht die Schwächung des Mastsegmentquerschnittes aus. Die Zarge 3 ist ein aus Blech gewalztes, mit einer Längsschweißnaht 4 verschlossenes Oval und besitzt naturgemäß erhebliche Toleranzen. Die Zarge 3 wird in die Zargenöffnung 5 des Mastsegmentes 2 eingeschoben und dann mit diesem stoffschlüssig durch Schweißen verbunden.

Die Verschweißung der Zarge 3 mit dem Mastsegment 2 geschieht durch eine Stumpfnaht, die als HV- Naht zwischen der Zarge 3 und der für die Zarge 3 hergestellten Zargenöffnung 5 am Mastsegment 2 ausgebildet wird. Dazu ist an der Öffnung des Mastsegmentes 2 eine Dreidimensionale Schnittflanke 6 ausgebildet. Der konventionelle Herstellungsablauf besteht in der Walzung des Mastsegmentes, der Anzeichnung der projizierten Zargenform auf dem Segment und dem Ausschneiden und Nahtvorbereiten mit manuellen, handwerklichen Methoden. Die erreichbare Passgenauigkeit ist naturgemäß gering, der Zeitaufwand hierfür ist hoch. Der Einsatz von Industrierobotern zum Ausschneiden der Zargenöffnung 5 kann aus Gründen der Zugänglichkeit, der vorhandenen Toleranzen und des rauen Fertigungsumfeldes nicht praktiziert werden.

Hingegen wird entsprechend oben beschriebener Vorgehensweise die reale Querschnittsform der Zarge 3 vermessen, im CAD-System als ebene Kontur modelliert, auf das zylindrische oder konische Segment platziert und die Durchdringung einschließlich der Nahtvorbereitung errechnet. Dieser Prozessschritt ist einfach und schnell ausführbar. Das Mastsegment 2 besitzt einen derart großen Durchmesser, dass es in aller Regel nicht aus einem einzelnen, sondern einer größeren Zahl von Blechen mit Längsnähten 4 und Rundnähten 22 zusammengefügt ist. Die Zargenöffnung 5 sollte so auf dem Mastsegment platziert sein, dass, zur Vermeidung von Nahtkreuzungen, sie vollständig von einem Blechsegment umschlossen ist.

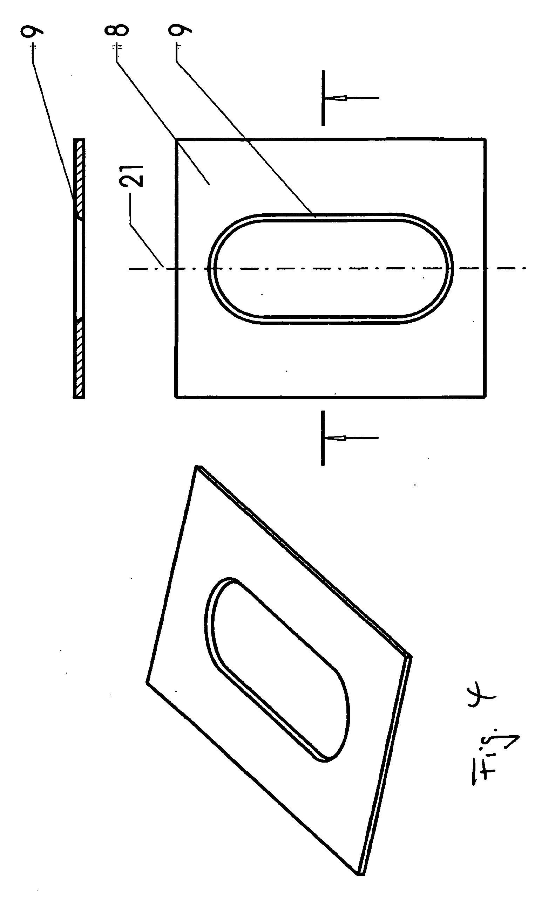

Dieses Segment wird entsprechend Figur 4 in ein ebenes Teil, das Zweidimensionale Blechsegment 8, enthaltend eine Transformierte Schnittflanke 9, durch eine explizite, geometrische Transformation überführt.

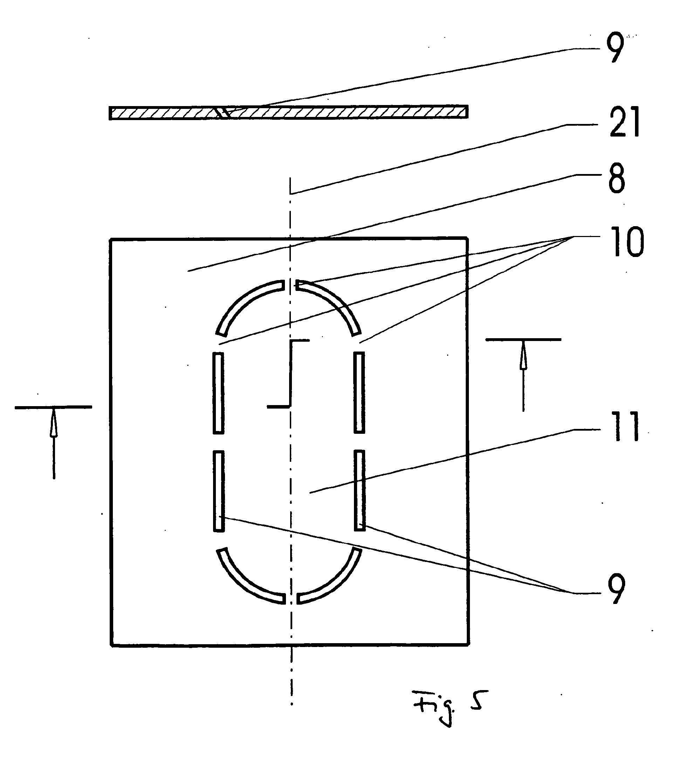

Das Zweidimensionale Blechsegment 8 wird entsprechend Figur 5 mit Verbindungsstegen 10 versehen derart, dass das Abfallteil 11 mit dem Zweidimensionalen Blechsegment 8 verbunden bleibt. Die Verbindungsstege 10 werden bevorzugt an den Stellen der Transformierten Schnittflanke 9 eingefügt, wo die beim Biegen entstehenden Vergleichsspannungen ein Maximum bilden.

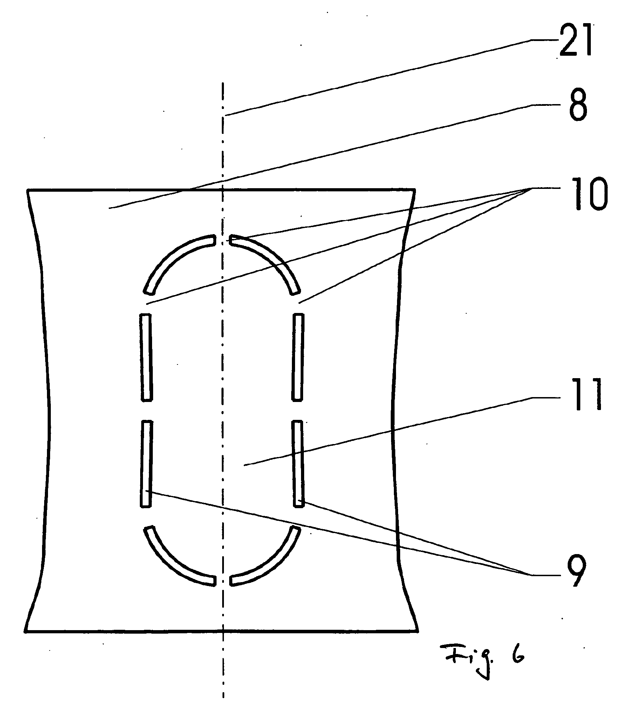

Aus der Datenbank 1 werden geometrische Offsetwerte, die die Effekte der plastischen Verformung beim Walzen kompensieren, gewonnen. Diese werden dem ebenen Bauteil aufgeschalten und verzerren damit seine ideale geometrische Form, wie das Figur 6 in rein qualitativer Form und in extremer maßstäblicher Überhöhung andeutet. Das Segment wird dann zu einer Schale umgeformt, was in einer Drei- oder Vierwalzenbiegemaschine, in einer Kantmaschine oder auch in einem Gesenk vorgenommen werden kann, wobei der Umformprozess hinsichtlich Art und Ablauf (Art der verwendeten Maschine, Grad der Zustellung, Wälzendurchmesser...) den Vorgaben der Datenbank entsprechen muss.

In einem letzten Fertigungsschritt werden nach dem Umformprozess die Verbindungsstege 10 manuell geöffnet, z.B. unter Verwendung eines Winkelschleifers oder eines Handschneidbrenners, und gegebenenfalls nachgearbeitet und verschliffen.

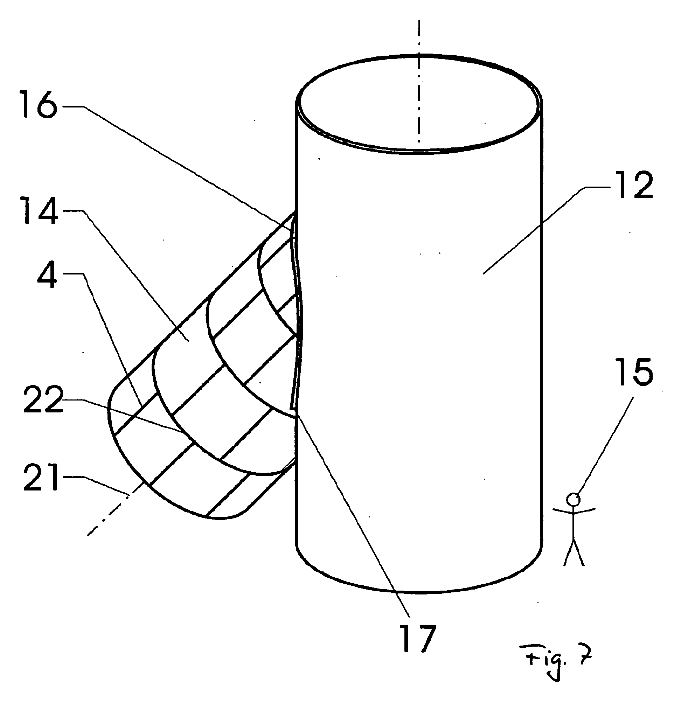

Ein zweites Ausführungsbeispiel entsprechend Figur 7 zeigt die Herstellung eines überschweren Rohrknotens als Verbindung zweier Röhre sehr großen Durchmessers. Zur Verdeutlichung ist in Figur 7 eine erwachsenen Person 15 dargestellt. Die übliche Vorgehensweise im Stahlbau besteht dabei darin, dass das im Durchmesser größere der beiden am Rohrknoten beteiligten Rohre, Hauptrohr 12, unbearbeitet belassen, das kleinere von diesem, Stutzenrohr 14, im Sinne einer Boolschen Operation "Differenz" beschnitten und zur Montage dann auf das Hauptrohr 12 aufgesetzt wird. Die Verbindung von Hauptrohr 12 und Stutzenrohr 14 geschieht durch Schweißen, wozu am Stutzenrohr 14 eine Schweißnahtvorbereitung 16 für eine Stumpfnaht angebracht ist. Im Bereich des von den beiden Rohren, des Hauptrohres 12 und des Stutzenrohres 14, eingeschlossenen stumpfen Winkels liegt die Schweißnahtvorbereitung an der Außenseite des Stutzenrohres 14 und springt am Umkehrpunkt 17 auf die Innenseite des Stutzenrohres 14 über. Die Konstruktion des Anschlusses des Stutzenrohres 14 an das Hauptrohr 12 einschließlich der am Umkehrpunktes 17 von der Rohraußen- zur Rohrinnenseite springenden Schweißnahtvorbereitung 16 geschieht mit spezieller, geometrisch basierter Software schnell und einfach, kann aber auch, allerdings extrem zeitaufwendig, in einem dreidimensionales CAD-System punktweise ermittelt werden.

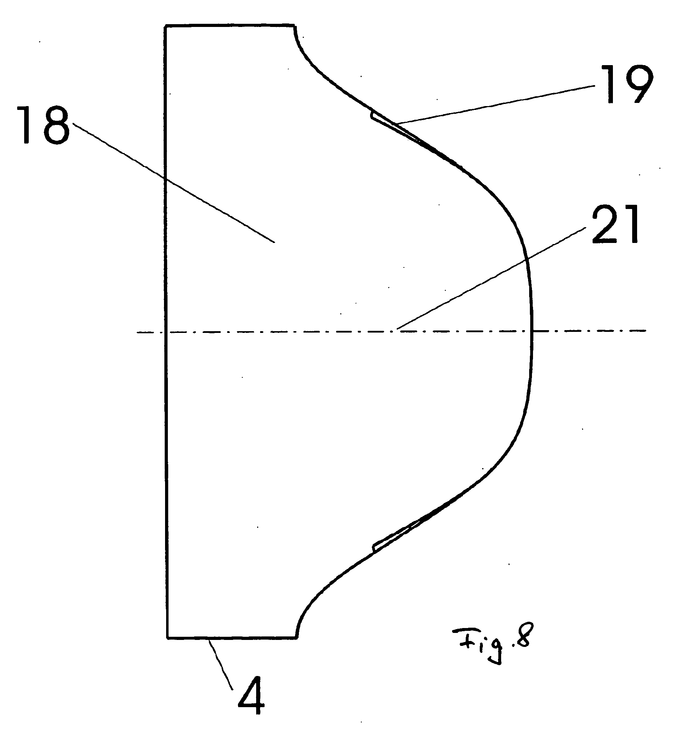

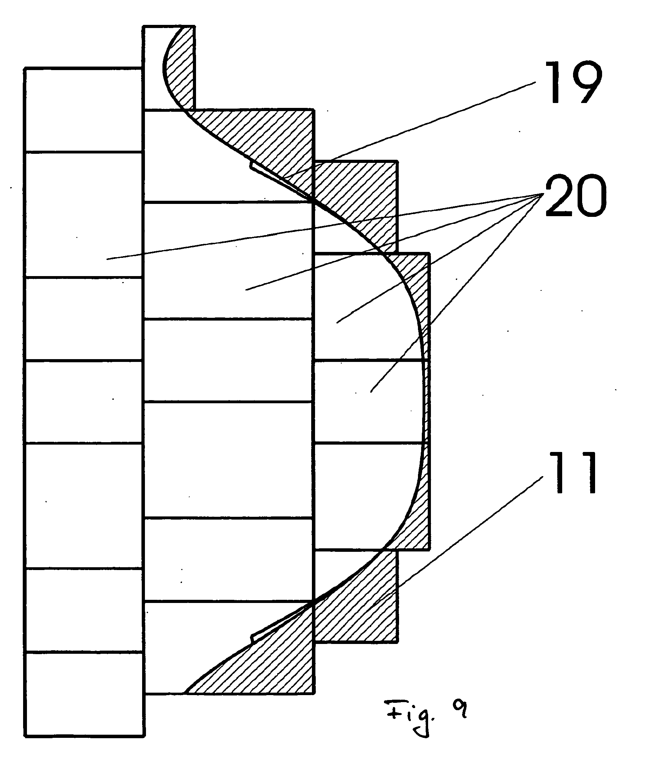

In einem anschließenden Schritt wird entsprechend Figur 8 die Mantelfläche des Stutzenrohres 14 in einer expliziten, geometrischen Transformation in ein Plattenförmiges Teil 18 mit nichtebenen Schnittflanken 19 überführt. Wegen der großen Abmessungen des Stutzenrohres 14 kann das Plattenförmige Teil 18 nicht aus einem einzelnen Blech, sondern muss aus einer Vielzahl von Rechteckigen Blechsegmenten 20 hergestellt werden. Dazu sind entsprechend Figur 9 die Blechsegmente 20 so auf dem Plattenförmigen Teil 18 anzuordnen, dass zwei Kanten der Blechsegmente 20 mit der Rohrachse 21 parallel sind. Sie sind auch so anzuordnen, dass Nahtkreuzungen vermieden werden. Die Schnittflanke 19 sollte sich so in die einzelnen Blechsegmente 20 einfügen, dass sie jeweils zwei gegenüberliegende Kanten der Blechsegmente 20 schneidet, trotzdem jedoch der Mengenanteil des Abfallmaterials minimal bleibt.

Für jedes Blechsegment 20 werden aus der Datenbank 1 Offsetwerte gewonnen und den Punkten der Schnittflanke 19 aufaddiert. Das geschieht mindestens für die vier Eckpunkte eines jeden Blechsegmentes 20. Der Offsetwert von Punkten der Schnittflanke 19 ohne explizit aus der Datenbank 1 gewonnene Parameter wird auf Basis benachbarter Offsetwerte linear oder mit einem Spline interpoliert. Die Offsetwerte verzerren die rechteckige Form jedes Blechsegmentes 20, allerdings in einem Maße, das klein ist zu den Abmessungen des Blechsegmentes 20. Die Teilung der Blechsegmente 20, die Teile der Schnittflanke 19 enthalten, durch dieselbe wird durch die Einfügung von Verbindungsstegen 10 aufgehoben derart, dass diese an Stellen größter Vergleichsspannung eingefügt werden. Sie werden auch eingefügt im Bereich der Aussenkontur jedes Blechsegmentes 20, in der Form, dass die Aussenkontur nicht unterbrochen ist. Die bisher vollständig an einem Computerarbeitsplatz manipulierten Daten werden im nächsten Schritt in einem standardisierten Datenformat, z. B. dem DSTV-Format (Standardbeschreibung von Stahlbau-Teilen für die NC-Steuerung [XNC]. Empfehlungen des DSTV-Arbeitsausschusses IT, 9.Auflage, November 2006) an eine Schneidmaschine übertragen und ausgeschnitten. Die Schneidmaschine muss mindestens vier numerisch gesteuerte Achsen besitzen, davon zwei zur Orientierung des Brenners. Sind die Blechsegmente 20 ausgeschnitten, werden sie auf den Radius des Stutzenrohres 14 gewalzt, wobei das Walzen entsprechend den Vorgaben der Datenbank 1 hinsichtlich der verwendeten Walzmaschinen und deren Parameter (Walzendurchmesser, Walzenzustellung...) geschehen muss. Danach werden die gewalzten Blechsegmente 20 untereinander mit Längsnähten 4 und Rundnähten 22 zum Stutzenrohr 14 und dieses mit dem Hauptrohr 12 entlang der Schweißnahtvorbereitung 16 verbunden.

### Vorteile der erfinderischen Lösung

Die Vorteile der erfinderischen Lösung liegen in der Vermeidung der Nutzung einer Rohrbrennschneidmaschine. Diese Maschine ist kostenaufwendig und von einem Behälter- oder Anlagenbauer, besonders dann, wenn sie für die hier betrachteten Bauteilabmessungen ausgelegt ist, kaum wirtschaftlich zu betreiben. Die Nutzung eines Dienstleistungsbetriebes erfordert den Transport der zylindrischen Rohrschüsse zum Dienstleister und zurück zum Fertigungsbetrieb. Die dafür erforderlichen Transportaufwendungen sind hoch, ein Straßentransport ist wegen der Abmessungen u.U. gar ausgeschlossen.

Entsprechend der erfinderischen Lösung werden nur die ohnehin für die Realisierung der beschriebenen .Bauteile notwendigen Maschinen benötigt, d.h. eine Brennschneidmaschine mit einem Fasenaggregat zur Brennerschwenkung einerseits, eine Walzmaschine zur Herstellung von Rohrschüssen und Schalen andererseits. Alle Bearbeitungsschritte, vom Blech bis zur fertiggestellten Rohrverbindung, können an einem Ort vorgenommen werden. Anpassarbeiten lassen sich leichter ausführen, da bei der Montage nur einzelne, vergleichsweise massearme und leicht zu handhabende Schalen anstatt des kompletten Stutzenrohres zu handhaben sind.

## Patentansprüche

1. Verfahren zur Herstellung einer überschweren Rohrverbindung aus zwei, sich in ihren Achsen kreuzende, mit einer zylindrischen, kegelförmigen oder ovalen Mantelfläche versehenen Partnerelementen, eine Zarge (3) und ein Mastsegment (2) oder ein Hauptrohr (12) und ein Stutzenrohr (14), wobei eines der Partnerelement eine Zylinder- oder Kegelform besitzt und eine Durchdringung stattfindet,
**gekennzeichnet dadurch,**
**dass** ein dreidimensionales Computermodell geschaffen wird, in welchem die Partnerelemente so gefügt sind, dass sie- von einem Wurzelspalt abgesehen- sich umlaufend miteinander linienförmig berühren und mit dem Partnerelement wechselweise zur Bauteilaussen- oder Bauteilinnenseite eine v-förmige Fuge mit konstantem Nahtöffnungswinkel und mit einem Betrag von mindestens 40 Grad bilden, gleichzeitig jedoch die technologische Grenze des Schneidverfahrens hinsichtlich des maximal herstellbaren Fasenwinkels von 45 Grad nicht überschritten wird;
**dass** jenes Partnerelement, an dem die v-förmige Fuge angeformt ist, aus dem dreidimensionalen Computermodell durch eine explizite, geometrische Transformation in eine ebene plattenförmige Schnittform, das Plattenförmige Teil (18) mit zur Blechoberfläche nicht rechtwinklig verlaufenden Schnittflanken, überführt wird, derart, dass die Schnittflanke (19) als Liste eng aneinander liegender Punkte vorliegt, die durch Interpolation eine Bahnkurve bilden und für jeden Punkt ein in Richtung der Normalen der Bahnkurve verlaufender, zur Oberfläche des Plattenförmigen Teils (18) gemessener Winkel die Liste ergänzt; dass aus einer Datenbank (1), angefüllt mit Korrekturwerten und die zur Verfeinerung mit geeigneten mathematischen Methoden zwischeninterpoliert werden, abhängig von geometrischer Ähnlichkeit, Wanddicke, zweidimensionaler Ausdehnung und Biegeradius des Plattenförmigen Teils (18), Offsetwerte zur Kompensation der beim Walzen oder Biegen auftretenden plastischen Verformungen und Vorgaben zum Biege- oder Walzprozess gewonnen werden, indem dieseder Kontur des plattenförmigen Teils (18) aufaddiert werden.

2. Verfahren zur Herstellung überschwerer Rohrverbindungen nach Anspruch 1,
**gekennzeichnet dadurch,**
**dass** eine das Plattenförmige Teil (18) umschreibende Rechteckform gefunden wird derart, dass zwei Rechteckseiten zur Rohrachse (21) parallel sind.

3. Verfahren zur Herstellung überschwerer Rohrverbindungen nach Anspruch 1 und 2,
**gekennzeichnet dadurch,**
**dass** das Ausschneiden des Plattenförmigen Teiles (18) mit einer numerisch gesteuerten, zumindest mit vier computergesteuerten Bewegungsachsen, deren zwei der Brennerorientierung relativ zur Lotrechten dienen, ausgerüsteten Maschine vollzogen wird, das erforderliche Bewegungsprogramm der Maschine aus der mit den Offsetwerten beaufschlagten Punkt- und Winkelliste der Schnittflanke (19) gewonnen wird und aus einem Blech, das größer als das umschreibende Rechteck ist, zunächst das Plattenförmige Teil (18), dann das umschreibende Rechteck ausgeschnitten wird und eine feste Verbindung zwischen dem Plattenförmigen Teil (18) und dem umschreibendem Rechteck durch Verbindungsstege (10) erhalten bleibt und ein Schneidverfahren verwendet wird, das eine zur Blechdicke nur vernachlässigbar kleine Schnittfuge produziert.

4. Verfahren zur Herstellung überschwerer Rohrverbindungen nach Anspruch 1 bis 3,
**gekennzeichnet dadurch,**
**dass** das Plattenförmige Teil (18) mit dem vermittels der Verbindungsstege (10) fest mit ihr verbundenen umschreibenden Rechteck entweder in einer Drei- oder Vierwalzen-Biegemaschine oder in einer Kantmaschine mit einem sehr kleinen Kantabstand polygonal gerundet wird und der Ablauf der Rundungsprozedur genau den Vorgaben aus der Datenbank (1) entspricht.

5. Verfahren zur Herstellung überschwerer Rohrverbindungen nach Anspruch 1 bis 3,
**gekennzeichnet dadurch,**
**dass** bei entsprechender Große des Plattenförmigen Teils (18) dieses in Rechteckige Blechsegmente (20) zerlegt wird, derart, dass an den Verbindungskanten der Rechteckigen Blechsegmente (20) untereinander eine v-förmige Schweißnahtvorbereitung hergestellt wird und die Rechteckigen Blechsegmente (20) so in das Plattenförmige Teil (18) eingepasst sind, derart, dass die Oberfläche des Plattenförmigen Teils (18) von diesen Rechteckigen Blechsegmenten (20) unter Ausschluss von Nahtkreuzungen komplett abgedeckt wird und eine Kante jedes Rechteckigen Blechsegmentes (20) mit der Rohrachse (21) parallel verläuft.

6. Verfahren zur Herstellung überschwerer Rohrfachwerkknoten nach Anspruch 1 bis 5,
**gekennzeichnet dadurch,**
**dass** nach dem Biegen oder Walzen das Stutzenrohr (12) bildende Plattenförmige Teil (18) oder Teile von ihm aus dem oder den Rechteckigen Blechsegmenten (20) entfernt wird/werden, indem die Verbindungsstege (10) beseitigt und dieses mit dem Hauptrohr (12) durch Schweißen verbunden wird.

## Claims

1. A method for manufacturing a superheavy pipe connection from two partner elements intersecting in their axes and provided with a cylindrical, conical or oval lateral surface, a frame (3) and a mast segment (2) or a main pipe (12) and a socket pipe (14), wherein one of the partner elements has a cylindrical or conical shape and penetration takes place,
**characterised in that**
a three-dimensional computer model is created in which the partner elements are joined so that - apart from a root gap - they touch each other circumferentially and linearly and form with the partner element, alternately on the outside or inside of the component, a v-shaped joint with a constant seam opening angle amounting to at least 40 degrees, but wherein the technological boundary of the cutting process is not exceeded in terms of the maximum bevel angle of 45 degrees that can be produced;
**in that** the partner element on which the v-shaped joint is formed is converted from the three-dimensional computer model by means of an explicit, geometric transformation, to a flat, plate-shaped cut, the plate-shaped part (18) having cut edges that do not run perpendicularly to the plate surface, so that the cut edge (19) exists as a list of points lying close together, which form a trajectory by interpolation and so that, for each point, an angle running in the direction of the normal of the trajectory and measured on the surface of the plate-shaped part (18) supplements the list;
**in that** offset values for compensating for the plastic deformations occurring during rolling and bending and specifications for the bending or rolling process are obtained from a database (1) filled with correction values which are intermediately interpolated for refining with suitable mathematical methods, dependent on geometric similarity, wall thickness, two-dimensional extension and bending radius of the plate-shaped part (18), by adding these values to the contour of the plate-shaped part (18).

2. The method for manufacturing superheavy pipe connections according to Claim 1,
**characterised in that**
a rectangular shape circumscribing the plate-shaped part (18) is found so that two rectangular sides are parallel to the pipe axis (21).

3. The method for manufacturing superheavy pipe connections according to Claim 1 and 2,
**characterised in that**
the plate-shaped part (18) is cut out with a digitally controlled machine equipped with at least four computer-controlled axes of movement, two of which are used for the burner orientation relative to the perpendicular, **in that** the required movement program of the machine is obtained from the point and angle list of the cut edge (19) loaded with the offset values, **in that** first the plate-shaped part (18), then the circumscribing rectangle, are cut out from a plate which is larger than the circumscribing rectangle, and **in that** a fixed connection is maintained between the plate-shaped part (18) and the circumscribing rectangle by means of linking bars (10) and a cutting method is used which produces a small kerf that is only negligible in terms of the plate thickness.

4. The method for manufacturing superheavy pipe connections according to Claims 1 to 3,
**characterised in that**
the plate-shaped part (18) is rounded polygonally with the circumscribing rectangle securely connected to it by means of the linking bars (10), either in a three- or four-roll bending machine or in an edging machine with a very short distance between edges, and **in that** the course of the rounding procedure conforms exactly to the specifications from the database (1).

5. The method for manufacturing superheavy pipe connections according to Claims 1 to 3,
**characterised in that**
where the plate-shaped part (18) is of suitable size it is separated into rectangular plate segments (20) in such a manner that a v-shaped weld seam preparation is produced on the respective connecting edges of the rectangular plate segments (20) and the rectangular plate segments (20) are fitted into the plate-shaped part (18) in such a manner that the surface of the plate-shaped part (18) is completely covered by these rectangular plate segments (20) to the exclusion of weld crossings, and one edge of each rectangular plate segment (20) runs parallel with the pipe axis (21).

6. The method for manufacturing superheavy pipe connections according to Claims 1 to 5,
**characterised in that**
after bending or rolling, the plate-shaped part (18) or parts forming the socket pipe (12) is/are removed by it from the rectangular plate segment(s) (20) by removing the linking bars (10) and connecting it to the main pipe (12) by welding.

## Revendications

1. Procédé de fabrication d'un raccord tubulaire hyper lourd constitué de deux éléments partenaires se croisant avec leurs axes, pourvus d'une surface d'enveloppe cylindrique, conique ou ovale, d'un châssis (3) et d'un segment de mât (2) ou d'un tube principal (12) et d'un tube de support (14), l'un des éléments partenaires ayant une forme cylindrique ou conique et une pénétration a lieu,
**caractérisé en ce que**
un modèle informatique tridimensionnel est créé, dans lequel les éléments partenaires sont assemblés de telle sorte qu'ils sont en contact l'un avec l'autre en forme de ligne de manière circonférentielle - à l'exception de l'écartement des bords - et forment une jointure en forme de V ayant un angle d'ouverture de soudure constant et une grandeur d'au moins 40 degrés avec l'élément partenaire, en alternance vers le côté extérieur du composant ou le côté extérieur du composant, mais dans le même temps, la limite technologique du procédé de coupe en ce qui concerne l'angle de chanfrein maximal de 45 degrés pouvant être obtenu n'est pas dépassée,
chaque élément partenaire sur lequel la jointure en forme de V est formée, est transféré à partir du modèle informatique tridimensionnel, au moyen d'une transformation géométrique explicite, dans une forme de section en forme de plaque plane, la pièce en forme de plaque (18) ayant des flancs de coupe ne s'étendant pas à angle droit par rapport à la surface de tôle de manière à ce que le flanc de coupe (19) soit présent sous la forme d'une liste de points étroitement espacés les uns des autres, qui forment une trajectoire par interpolation et un angle qui s'étend dans la direction de la normale à la trajectoire et qui est mesuré par rapport à la surface de la pièce en forme de plaque (18) complète la liste pour chaque point,
des valeurs de décalage destinées à compenser les déformations plastiques survenant lors du laminage ou du pliage sont obtenues à partir d'une base de données (1) contenant des valeurs de correction et interpolées en vue d'un affinement, par des méthodes mathématiques adaptées, en fonction de la similitude géométrique, de l'épaisseur de paroi, de la dilatation bidimensionnelle et du rayon de courbure de la pièce en forme de plaque (18), et des valeurs par défaut pour le processus de pliage ou de laminage sont obtenues, ces valeurs de décalage étant additionnées au contour de la pièce en forme de plaque (18).

2. Procédé de fabrication de raccords tubulaires hyper lourds selon la revendication 1, **caractérisé en ce qu'**une forme rectangulaire qui circonscrit la pièce en forme de plaque (18) est trouvée de telle sorte que deux côtés du rectangle sont parallèles à l'axe de tube (21).

3. Procédé de fabrication de raccords tubulaires hyper lourds selon les revendications 1 et 2, **caractérisé en ce que** la découpe de la pièce en forme de plaque (18) est réalisée en utilisant une machine à commande numérique, équipée d'au moins quatre axes de mouvement pilotés par ordinateur, dont deux servent à orienter la torche par rapport à la verticale, dans lequel le programme de déplacement requis de la machine est obtenu à partir de la liste de points et d'angles du flanc de coupe (19), avec les valeurs de décalage appliquées, et dans lequel d'abord la pièce en forme de plaque (18) puis le rectangle circonscrit sont découpés à partir d'une tôle qui est plus grande que le rectangle circonscrit, et une liaison fixe entre la pièce en forme de plaque (18) et le rectangle circonscrit est maintenue par des nervures de liaison (10) et un procédé de découpe est utilisé, lequel procédé produit une fente de coupe qui est suffisamment petite par rapport à l'épaisseur de tôle, pour être négligée.

4. Procédé de fabrication de raccords tubulaires hyper lourds selon les revendications 1 à 3, **caractérisé en ce que** la pièce en forme de plaque (18) avec le rectangle circonscrit fermement relié à elle au moyen des nervures de liaison (10) est arrondie polygonalement, soit dans une machine à cintrer à trois ou quatre rouleaux, soit dans une machine à border ayant une distance de bordage très petite, et la séquence de la procédure d'arrondi correspond précisément aux valeurs par défaut de la base de données (1).

5. Procédé de fabrication de raccords tubulaires hyper lourds selon les revendications 1 à 3, **caractérisé en ce qu'**à taille correspondante de la pièce en forme de plaque (18), cette pièce est divisée en segments de tôle rectangulaires (20) de manière à ce qu'une préparation de cordon de soudure en forme de V soit créée sur les bords de liaison des segments de tôle rectangulaires (20) les uns au dessous des autres, et les segments de tôle rectangulaires (20) sont emboîtés dans la pièce en forme de plaque (18) de telle sorte que la surface de la pièce en forme de plaque (18) est entièrement recouverte par ces segments de tôle rectangulaires (20), à l'exclusion des intersections de soudure, et un bord de chaque segment de tôle rectangulaire (20) s'étend parallèlement à l'axe de tube (21).

6. Procédé de fabrication de raccords tubulaires hyper lourds selon les revendications 1 à 5, **caractérisé en ce que**, après le cintrage ou le laminage, la pièce en forme de plaque (18) qui forme le tube de support (12), ou des parties de celle-ci, est (sont) retirée(s) des segments de tôle rectangulaires (20), les nervures de liaison (18) étant éliminées et la pièce étant assemblée au tube principal (12) par soudage.
